# EUROPEAN PATENT APPLICATION

(11) **EP 4 800 274 A1**
(43) Date of publication of application: **02.09.2026**
(21) Application number: 25823099.4
(22) Date of filing: 13.10.2025
(51) Int. Cl.: F16K 11/074

(54) **SELECTOR VALVE**

(30) Priority: 02.01.2025 CN 202510002138
(71) Applicant: Inscinstech Co., Ltd., Suzhou, Jiangsu 215000 (CN)
(72) Inventor: LI, Dawei, Suzhou, Jiangsu 215000 (CN); YANG, Guanghua, Suzhou, Jiangsu 215000 (CN); LIU, Baogang, Suzhou, Jiangsu 215000 (CN); YANG, Qian, Suzhou, Jiangsu 215000 (CN)
(74) Representative: Casalonga
(86) International application number: PCT/CN2025/127194
(87) International publication number: WO 2026/144377

(57) **Abstract**

The present disclosure relates to a selection valve, including: a stator and a rotor that can rotate relative to each other around a rotation axis, where the stator and the rotor are respectively provided with a first surface and a second surface that are opposite to each other and are in dynamic hermetic engagement; the first surface is provided with a first inlet and outlet hole, a second inlet and outlet hole, a first radial stator groove, a second radial stator groove, and a plurality of pairs of component connection holes, and the component connection holes include a first component connection hole and a second component connection hole; the second surface is provided with an internal rotor flow channel inlet, an internal rotor flow channel outlet, an annular rotor groove, and a first radial rotor groove; and when the rotor rotates relative to the stator, the first radial stator groove and the second radial stator groove can connect with the internal rotor flow channel outlet and the first radial rotor groove, respectively. According to the above solution, the problems of complex structure and complicated operation of existing chromatography systems can be alleviated, and the flushing of all flow channels inside the selection valve can also be achieved, thereby preventing residues inside the selection valve from affecting the accuracy of subsequent analysis.

## Description

### TECHNICAL FIELD

The present disclosure relates to the fields of protein purification, nucleic acid synthesis, liquid chromatography, and the like, and in particular, to a selection valve for a component such as a synthesis column or a chromatography column.

### BACKGROUND

In the fields of protein purification, nucleic acid synthesis, liquid chromatography, and the like, a column (e.g., a synthesis column or a chromatography column) is a main device for purifying, synthesizing, or differentiating an analyte. During the test, a process combination in which a liquid path passes through the column in a forward direction or in a reverse direction or the liquid path does not pass through the column is achieved through the switching of a selection valve (a column position valve), thereby achieving the purpose of purifying, synthesizing, or differentiating the analyte.

In order to meet more complex process requirements, the chromatography system may include a plurality of columns, and meanwhile, the flow path may be switched by the coordinated action of a plurality of selection valves, so as to achieve the combined operation of the plurality of columns, thereby realizing that the liquid flow passes through the columns in a set order, or the columns work separately to purify, synthesize, or differentiate different substances. It can be seen that in a complex chromatography system, a large number of selection valves not only makes the structure of the chromatography system rather complex, but also increases the complexity of operation.

### SUMMARY

Embodiments of the present application at least provide a selection valve, which can solve the problems of complex structure and complicated operation of existing chromatography systems, and can achieve flushing of all flow channels inside the selection valve, thereby preventing residues inside the selection valve from affecting the accuracy of subsequent analysis.

An embodiment of the present application provides a selection valve. The selection valve includes: a stator and a rotor capable of rotating relative to each other around a rotation axis. The stator and the rotor are respectively provided with a first surface and a second surface that are opposite to each other and are in dynamic hermetic engagement;
the first surface is provided with a first inlet and outlet hole, a second inlet and outlet hole, a first radial stator groove, a second radial stator groove, and a plurality of pairs of component connection holes, the first radial stator groove is connected with the second inlet and outlet hole, the first inlet and outlet hole is located at the rotation axis, the second radial stator groove and the first radial stator groove are symmetrically arranged with respect to the first inlet and outlet hole, each pair of the component connection holes includes a first component connection hole and a second component connection hole, and the first component connection hole and the second component connection hole are symmetrically arranged with respect to the first inlet and outlet hole;
the second surface is provided with an internal rotor flow channel inlet, an internal rotor flow channel outlet, an annular rotor groove, and a first radial rotor groove, the internal rotor flow channel inlet is located at the rotation axis to be connected with the first inlet and outlet hole, the internal rotor flow channel outlet is connected with the internal rotor flow channel inlet via an internal rotor flow channel arranged in the rotor, the annular rotor groove is arranged around the internal rotor flow channel inlet, the annular rotor groove is connected with the first radial stator groove and the second radial stator groove, the first radial rotor groove is connected with the annular rotor groove, and a connecting line between the internal rotor flow channel inlet and the internal rotor flow channel outlet is collinear with the first radial rotor groove; and
when the rotor rotates relative to the stator, one of the first component connection hole and the second component connection hole of one pair of the component connection holes is connected with the first radial rotor groove, and the other is connected with the internal rotor flow channel outlet, or one of the first radial stator groove and the second radial stator groove is connected with the first radial rotor groove, and the other is connected with the internal rotor flow channel outlet.

In an optional embodiment, both the first radial stator groove and the second radial stator groove extend from a position spaced from the rotation axis by a second radius to a position spaced from the rotation axis by a first radius, and
the first component connection hole and the second component connection hole are both located at a position spaced from the rotation axis by the first radius.

In an optional embodiment, the internal rotor flow channel outlet is located at a position spaced from the rotation axis by the first radius, the annular rotor groove is centered on the rotation axis and has the second radius, and the first radial rotor groove extends from a position spaced from the rotation axis by the second radius to a position spaced from the rotation axis by the first radius.

In an optional embodiment, each first component connection hole of the plurality of pairs of component connection holes is located on one side of a connecting line defined by the first radial stator groove, the second radial stator groove, and the first inlet and outlet hole, and each second component connection hole of the plurality of pairs of component connection holes is located on the other side of the connecting line defined by the first radial stator groove, the second radial stator groove, and the first inlet and outlet hole.

In an optional embodiment, the first radius is greater than the second radius.

In an optional embodiment, the rotor is of a double-layer structure including a first rotor part and a second rotor part, the first rotor part and the second rotor part are provided with a third surface and a fourth surface, respectively, the third surface and the fourth surface are opposite to each other and are hermetically engaged, one of the third surface and the fourth surface is provided with a second radial rotor groove, and the second radial rotor groove forms the internal rotor flow channel when the third surface and the fourth surface are hermetically engaged.

In an optional embodiment, the rotor is of a single-layer structure, and the internal rotor flow channel is formed by machining two flow channels intersecting each other into the rotor from the internal rotor flow channel inlet and the internal rotor flow channel outlet on the second surface.

In an optional embodiment, the second inlet and outlet hole is arranged at any location within a length extension range of the first radial stator groove.

In an optional embodiment, the second inlet and outlet hole is arranged at a position spaced from the rotation axis by the first radius.

In an optional embodiment, when the rotor rotates relative to the stator to a position where the first radial stator groove is connected with the first radial rotor groove and the second radial stator groove is connected with the internal rotor flow channel outlet, liquid introduced into the selection valve from the first inlet and outlet hole sequentially passes through the internal rotor flow channel inlet, the internal rotor flow channel, the internal rotor flow channel outlet, the second radial stator groove, the annular rotor groove, the first radial rotor groove, the first radial stator groove, and the second inlet and outlet hole, thereby enabling all flow channels inside the selection valve to be flushed.

The above technical solutions of the present application have the following beneficial technical effects:
The selection valve according to the embodiments of the present application may be connected to a plurality of columns via a plurality of pairs of component connection holes; that is, a first component connection hole and a second component connection hole of one pair of component connection hole are connected to a forward port and a reverse port of one column, respectively. Thus, by rotating the rotor to different positions relative to the stator, the liquid can pass through one column in a forward direction, pass through one column in a reverse direction, or not pass through the column. It can be seen that the selection valve can replace a plurality of column position valves to achieve the combined function of the plurality of column position valves. Therefore, the use of the selection valve in the chromatography system is beneficial for reducing the number of valves and simplifying the structure of the chromatography system. In addition, when the liquid does not pass through the column, the liquid can flow through all flow channels inside the selection valve, so as to achieve flushing of all flow channels inside the selection valve, thereby preventing residues inside the selection valve from affecting the accuracy of subsequent analysis.

### BRIEF DESCRIPTION OF THE DRAWINGS

The accompanying drawings described herein, which are provided to offer a further understanding of the present disclosure, constitute a part of the present disclosure. The exemplary embodiments of the present disclosure and the description thereof are provided to illustrate the present disclosure and do not constitute undue limitations on the present disclosure. In the drawings:
FIG. 1 is a schematic structural diagram of a selection valve according to an embodiment of the present application;
FIG. 2 is a schematic structural diagram of a first surface of a stator according to some embodiments;
FIG. 3 is a schematic structural diagram of a rear surface of a stator according to some embodiments;
FIG. 4 is a schematic diagram of dimensions of a stator according to some embodiments;
FIG. 5 is a schematic structural diagram of a second surface of a first rotor part according to some embodiments;
FIG. 6 is a schematic structural diagram of a third surface of a first rotor part according to some embodiments;
FIG. 7 is a schematic diagram of dimensions of a first rotor part according to some embodiments;
FIG. 8 is a schematic structural diagram of a fourth surface of a second rotor part according to some embodiments;
FIG. 9 is a schematic structural diagram of a rotor according to some embodiments;
FIG. 10 is a schematic diagram of a selection valve in a first rotation position according to an embodiment of the present application;
FIG. 11 is a schematic diagram of a chromatography system using a selection valve according to an embodiment of the present application when the selection valve is in a first rotation position and liquid passes through a column A in a forward direction;
FIG. 12 is a schematic diagram of a selection valve in a second rotation position according to an embodiment of the present application;
FIG. 13 is a schematic diagram of a chromatography system using a selection valve according to an embodiment of the present application when the selection valve is in a second rotation position and liquid passes through a column A in a reverse direction;
FIG. 14 is a schematic diagram of a selection valve in a third rotation position according to an embodiment of the present application; and
FIG. 15 is a schematic diagram of a chromatography system using a selection valve according to an embodiment of the present application when the selection valve is in a third rotation position and liquid does not pass through a column.

### Reference numerals:

100: selection valve; 110: stator; 111: first surface; 112: first inlet and outlet hole; 113: second inlet and outlet hole; 114: first radial stator groove; 115: second radial stator groove; 116: first component connection hole; 117: second component connection hole; 120: rotor; 121: first rotor part; 1211: second surface; 1212: internal rotor flow channel inlet; 1213: internal rotor flow channel outlet; 1214: annular rotor groove; 1215: first radial rotor groove; 1216: third surface; 1217: second radial rotor groove; 122: second rotor part; 1221: fourth surface.

### DETAILED DESCRIPTION

To enable those skilled in the art to better understand the technical solutions of the present application, the present application is further described in detail below with reference to the accompanying drawings and specific embodiments.

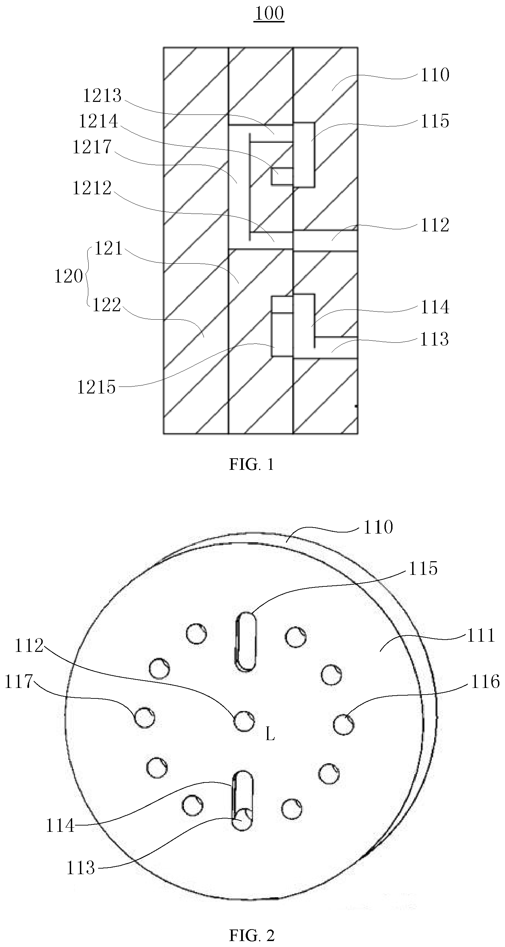

Referring to FIGs. 1 to 15, an embodiment of the present application provides a selection valve 100. The selection valve includes: a stator 110 and a rotor 120 that can rotate relative to each other around a rotation axis L. The stator 110 and the rotor 120 are respectively provided with a first surface 111 and a second surface 1211 that are opposite to each other and are in dynamic hermetic engagement.

The surface of the rotor 120 opposite to the first surface 111 of the stator 110 is a second surface 1211 of the rotor 120.

The dynamic hermetic engagement between the second surface 1211 of the rotor 120 and the first surface 111 of the stator may be formed in such a manner that the second surface 1211 of the rotor 120 and the first surface 111 of the stator abut against each other with a specific compression force therebetween.

Illustratively, the stator 110 and the rotor 120 may be separately in a disc shape, and the dimensions of the two may be similar. When the rotor 120 can rotate relative to the stator 110, the rotation axis L may pass through the centers (circle centers) of the stator 110 and the rotor 120. Certainly, the shapes of the stator 110 and the rotor 120 may alternatively be other shapes, such as a square or a prism.

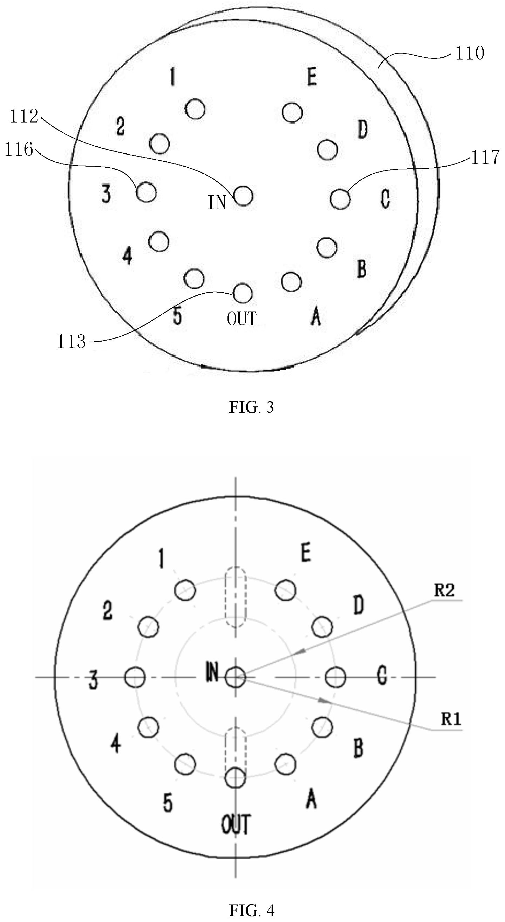

Referring to FIGs. 2 and 4, the first surface 111 of the stator 110 is provided with a first inlet and outlet hole 112 and a second inlet and outlet hole 113. The first inlet and outlet hole 112 is located at the rotation axis L. The second inlet and outlet hole 113 is located at a position spaced from the rotation axis L by a first radius R1, as shown in FIG. 4.

The first inlet and outlet hole 112 may be an inlet, and the second inlet and outlet hole 113 may be an outlet; or the first inlet and outlet hole 112 may be an outlet, and the second inlet and outlet hole 113 may be an inlet. In the following description, an example in which the first inlet and outlet hole 112 is an inlet (represented by letters IN in the figure) and the second inlet and outlet hole 113 is an outlet (represented by letters OUT in the figure) is used for description.

Referring to FIGs. 2 and 4, the first surface 111 of the stator 110 is provided with a first radial stator groove 114 and a second radial stator groove 115. The first radial stator groove 114 is connected with the second inlet and outlet hole 113, the second radial stator groove 115 and the first radial stator groove 114 are symmetrically arranged with respect to the first inlet and outlet hole 112, and both the first radial stator groove 114 and the second radial stator groove 115 extend from a position spaced from the rotation axis L by a second radius R2 to a position spaced from the rotation axis L by the first radius R1, and R1 > R2, as shown in FIG. 4. Since the first inlet and outlet hole 112 is located at the rotation axis L, the second radial stator groove 115 and the first radial stator groove 114 are symmetrically arranged with respect to the rotation axis L. Herein, the symmetrical arrangement used herein refers to that a connecting line between the second radial stator groove 115 and the first inlet and outlet hole 112 is collinear with a connecting line between the first radial stator groove 114 and the first inlet and outlet hole 112, and the distance between the second radial stator groove 115 and the first inlet and outlet hole 112 is equal to the distance between the first radial stator groove 114 and the first inlet and outlet hole 112.

Referring to FIGs. 2 and 4, the first surface 111 of the stator 110 is provided with a plurality of pairs of component connection holes. Each pair of component connection holes includes a first component connection hole 116 and a second component connection hole 117, the first component connection hole 116 and the second component connection hole 117 are symmetrically arranged with respect to the first inlet and outlet hole 112, and the first component connection hole 116 and the second component connection hole 117 are both located at a position spaced from the rotation axis L by the first radius R1. That is, the distance from the first component connection hole 116/the second component connection hole 117 to the rotation axis L (the first inlet and outlet hole 112) is equal to the distance from the second inlet and outlet hole 113 to the rotation axis L (the first inlet and outlet hole 112).

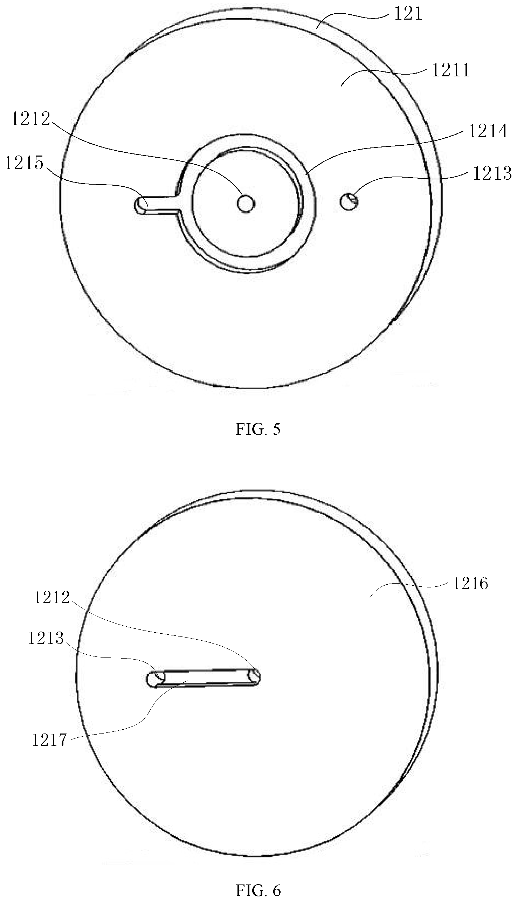

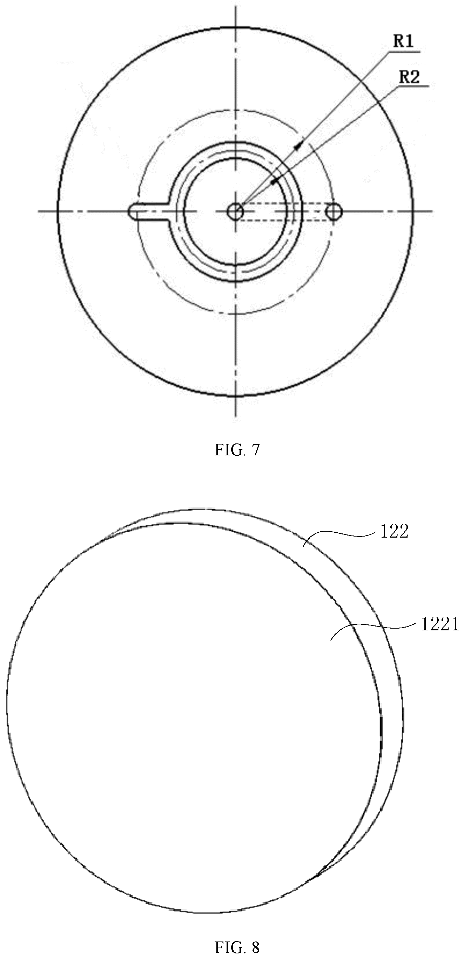

Referring to FIGs. 5 and 7, the second surface 1211 of the rotor 120 is provided with an internal rotor flow channel inlet 1212 and an internal rotor flow channel outlet 1213. The internal rotor flow channel inlet 1212 is located at the rotation axis L. That is, when the rotor 120 rotates relative to the stator 110, the internal rotor flow channel inlet 1212 can always be connected with the first inlet and outlet hole 112. The internal rotor flow channel outlet 1213 is located at a position spaced from the rotation axis L by the first radius R1. That is, when the rotor 120 rotates relative to the stator 110, the internal rotor flow channel outlet 1213 may be connected with the first radial stator groove 114, or the second radial stator groove 115, or one first component connection hole 116, or one second component connection hole 117. Certainly, when the internal rotor flow channel outlet 1213 is connected with the first radial stator groove 114, the internal rotor flow channel outlet 1213 may also be connected with the second inlet and outlet hole 113 via the first radial stator groove 114. Herein, the internal rotor flow channel outlet 1213 and the internal rotor flow channel inlet 1212 are openings, on the second surface 1211 of the rotor 120, of the internal rotor flow channel provided in the rotor 120,, and the connecting line between the internal rotor flow channel outlet 1213 and the internal rotor flow channel inlet 1212 is collinear with the first radial rotor groove 1215. Herein, the term "internal rotor flow channel" refers to a rotor flow channel structure located inside the rotor and thus not directly visible from the outside of the rotor.

Referring to FIGs. 5 and 7, the second surface 1211 of the rotor 120 is provided with an annular rotor groove 1214. The annular rotor groove 1214 is centered on the rotation axis L and has a second radius R2. That is, the annular rotor groove 1214 is arranged around the internal rotor flow channel inlet 1212, and when the rotor 120 rotates relative to the stator 110, the annular rotor groove 1214 can always be connected with the first radial stator groove 114 and the second radial stator groove 115.

Referring to FIGs. 5 and 7, the second surface 1211 of the rotor 120 is provided with a first radial rotor groove 1215. The first radial rotor groove 1215 extends from a position spaced from the rotation axis L by the second radius R2 to a position spaced from the rotation axis L by the first radius R1. That is, the first radial rotor groove 1215 is connected with the annular rotor groove 1214, and when the rotor 120 rotates relative to the stator 110, the first radial rotor groove 1215 may be connected with the first radial stator groove 114, or the second radial stator groove 115, or one first component connection hole 116, or one second component connection hole 117. Certainly, when the first radial rotor groove 1215 is connected with the first radial stator groove 114, the first radial rotor groove 1215 may also be connected with the second inlet and outlet hole 113 via the first radial stator groove 114.

The selection valve 100 according to an embodiment of the present application may be connected to a plurality of columns via a plurality of pairs of component connection holes; that is, a first component connection hole 116 and a second component connection hole 117 of one pair of component connection holes are connected to a forward port and a reverse port of one column, respectively. When the rotor 120 rotates relative to the stator 110, one of the first component connection hole 116 and the second component connection hole 117 of one pair of component connection holes may be connected with the first radial rotor groove 1215, and the other may be connected with the internal rotor flow channel outlet 1213. Alternatively, when the rotor 120 rotates relative to the stator 110, one of the first radial stator groove 114 and the second radial stator groove 115 may be connected with the first radial rotor groove 1215, and the other may be connected with the internal rotor flow channel outlet 1213. By rotating the rotor 120 to different positions relative to the stator 110, the selection valve 100 enables liquid to pass through one column in a forward direction, pass through one column in a reverse direction, or not pass through the column.

Illustratively, referring to FIGs. 2 and 3, the first surface 111 is provided with five pairs of component connection holes. First component connection holes 116 of the five pairs of component connection holes are designated as port 1, port 2, port 3, port 4, and port 5, respectively, and second component connection holes 117 of the five pairs of component connection holes are designated as port A, port B, port C, port D, and port E, respectively. The port 1 and the port A are configured to be connected to a forward port and a reverse port of column A, respectively; the port 2 and the port B are configured to be connected to a forward port and a reverse port of column B, respectively; the port 3 and the port C are configured to be connected to a forward port and a reverse port of column C, respectively; the port 4 and the port D are configured to be connected to a forward port and a reverse port of column D, respectively; and the port 5 and the port E are configured to be connected to a forward port and a reverse port of column E, respectively.

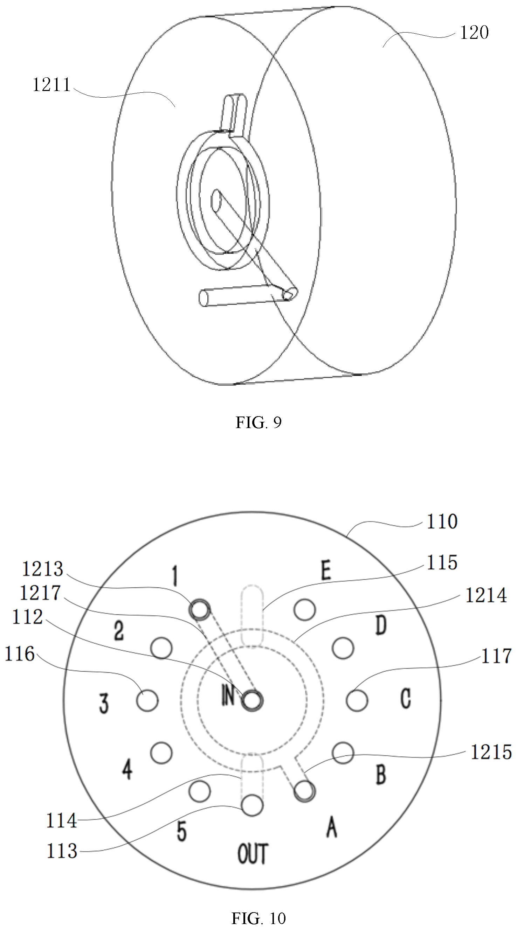

Referring to FIGs. 10 to 11, when the rotor 120 rotates to a first position, the internal rotor flow channel outlet 1213 is connected with the port 1, the first radial rotor groove 1215 is connected with the port A, and the liquid can pass through the column A in a forward direction. The flow path direction is specifically as follows: first inlet and outlet hole 112→internal rotor flow channel inlet 1212→internal rotor flow channel→internal rotor flow channel outlet 1213→port 1→forward port of column A→column 1→reverse port of column A→port A→first radial rotor groove 1215→annular rotor groove 1214→first radial stator groove 114→second inlet and outlet hole 113.

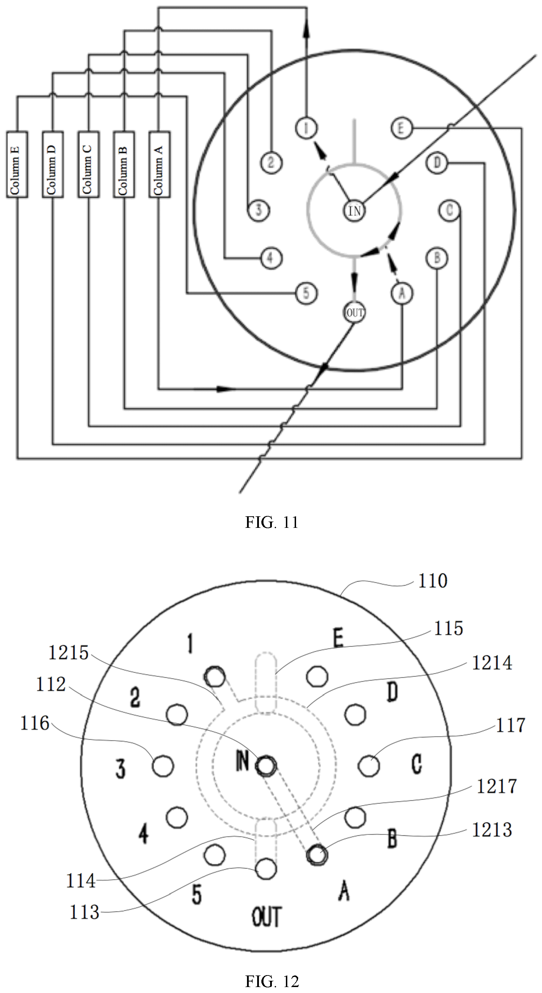

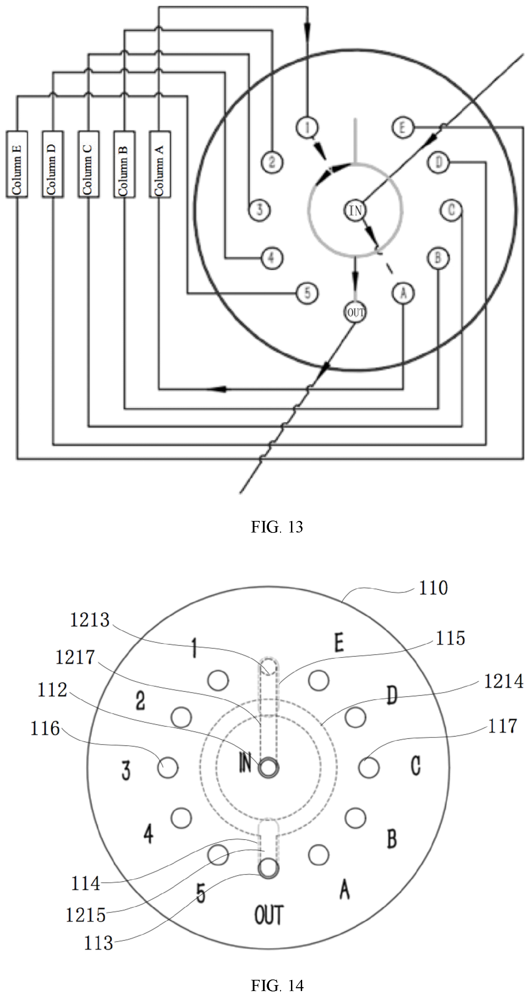

Referring to FIGs. 12 and 13, when the rotor 120 rotates to a second position, the internal rotor flow channel outlet 1213 is connected with the port A, the first radial rotor groove 1215 is connected with the port 1, and the liquid can pass through the column A in a reverse direction. The flow path direction is specifically as follows: first inlet and outlet hole 112→internal rotor flow channel inlet 1212→internal rotor flow channel→internal rotor flow channel outlet 1213→port A→reverse port of column A→column A→forward port of column A→port 1→first radial rotor groove 1215→annular rotor groove 1214→first radial stator groove 114→second inlet and outlet hole 113.

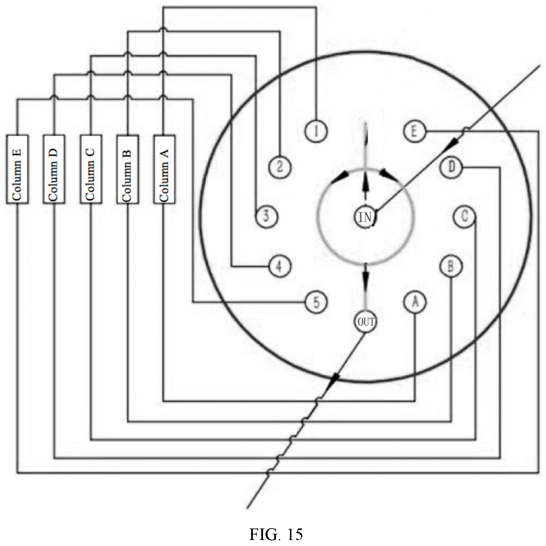

Referring to FIGs. 14 and 15, when the rotor 120 rotates to a third position, the internal rotor flow channel outlet 1213 is connected with the second radial stator groove 115, the first radial rotor groove 1215 is connected with the first radial stator groove 114 and the second inlet and outlet hole 113, and the liquid does not pass through the column. The flow path direction is specifically as follows: first inlet and outlet hole 112→internal rotor flow channel inlet 1212→internal rotor flow channel→internal rotor flow channel outlet 1213→second radial stator groove 115→annular rotor groove 1214→first radial rotor groove 1215→first radial stator groove 114→second inlet and outlet hole 113.

Similarly, by rotating the rotor 120 relative to the stator 110, the fluid can pass through one of the columns B, C, D, and E in a forward direction or a reverse direction.

It can be seen that the selection valve 100 can replace a plurality of column position valves to achieve the combined function of the plurality of column position valves. Therefore, the use of the selection valve 100 in the chromatography system is beneficial for reducing the number of valves and simplifying the system structure.

In addition, when the rotor 120 rotates to the third position, the liquid can flow through all flow channels inside the selection valve 100. Therefore, when the rotor 120 is at the third position, by replacing the liquid with a cleaning liquid, the cleaning liquid can flow through all flow channels inside the selection valve 100, achieving flushing of all flow channels inside the selection valve 100. In this way, contamination caused by residues inside the selection valve 100 can be avoided, which would otherwise affect the accuracy of subsequent analysis.

In some embodiments, referring to FIGs. 2 and 3, the first inlet and outlet hole 112, the second inlet and outlet hole 113, the first component connection hole 116, and the second component connection hole 117 are all holes penetrating through the stator 110, that is, penetrating from the first surface 111 of the stator 110 shown in FIG. 2 to the rear surface, of the stator 110 shown in FIG. 3, opposite to the first surface 111.

In some embodiments, referring to FIGs. 2 and 5, both the first surface 111 and the second surface 1211 are circular, and when the first surface 111 and the second surface 1211 are hermetically engaged, the circle centers of the two coincide with each other. During specific arrangements, the first inlet and outlet hole 112 is located at the circle center of the first surface 111, and the internal rotor flow channel inlet 1212 is located at the circle center of the second surface 1211. When the second surface 1211 rotates relative to the first surface 111 in a circumferential direction, the first inlet and outlet hole 112 can always be connected with the internal rotor flow channel inlet 1212.

In some embodiments, referring to FIGs. 2 and 5, the first radial stator groove 114 and the second radial stator groove 115 are both arranged in a radial direction of the first surface 111. The first radial rotor groove 1215 is arranged in a radial direction of the second surface 1211.

In some embodiments, referring to FIG. 3, the first component connection hole 116 and the second component connection hole 117 are spaced apart from each other in a circumferential direction of the first inlet and outlet hole 112, the first component connection hole 116 and the second component connection hole 117 included in each pair of component connection holes are located on two opposite sides of the first inlet and outlet hole 112, respectively, and included angles between adjacent component connection holes may be equal or unequal. As shown in FIG. 2, this embodiment shows that the first component connection holes 116 of the plurality of pairs of component connection holes are all located on one side of the connecting line defined by the first radial stator groove 114, the second radial stator groove 115, and the first inlet and outlet hole 112, and the second component connection holes 117 of the plurality of pairs of component connection holes are all located on the other side of the connecting line defined by the first radial stator groove 114, the second radial stator groove 115, and the first inlet and outlet hole 112. In this way, the positions of the component connection holes are relatively concentrated, such that by rotating the rotor 120 relative to the stator 110 by a small angle, the fluid can pass through different columns, thereby facilitating the operation of the selection valve 100.

In some embodiments, referring to FIG. 4, the distance from the first component connection hole 116/the second component connection hole 117 to the first inlet and outlet hole 112 is equal to the distance from the second inlet and outlet hole 113 to the first inlet and outlet hole 112, and the second inlet and outlet hole 113 is located at a position spaced from the rotation axis L by the first radius R1. In this way, when the rotor 120 rotates to the above third position, the distance from the end of the first radial rotor groove 1215 to the first inlet and outlet hole 112 is equal to the distance from the second inlet and outlet hole 113 to the first inlet and outlet hole 112; that is, the second inlet and outlet hole 113 is located at the end of the first radial rotor groove 1215. This can facilitate thorough cleaning of the first radial rotor groove 1215.

It can be envisaged that the second inlet and outlet hole 113 is not necessarily arranged at a position spaced from the rotation axis L by the first radius R1, and the second inlet and outlet hole 113 may be arranged at any position within the length extension range of the first radial stator groove 114, which can all achieve good cleaning of the first radial rotor groove 1215. That is, the distance between the second inlet and outlet hole 113 and the rotation axis L is less than the first radius R1 and greater than the second radius R2.

In some embodiments, referring to FIG. 4, the first radial stator groove 114 and the second radial stator groove 115 are located between the first component connection hole 116 (ports 1 to 5) and the second component connection hole 117 (ports A to E). As shown in FIG. 4, the embodiments show that the first component connection hole 116 and the second component connection hole 117 of each pair of component connection holes are symmetrically arranged along the centerline of the first surface 111, and the first radial stator groove 114 and the second radial stator groove 115 are arranged along the centerline of the first surface 111.

In some embodiments, referring to FIG. 5, the internal rotor flow channel outlet 1213 and the first radial rotor groove 1215 are located in a region outside the annular rotor groove 1214. In some other embodiments, the internal rotor flow channel outlet 1213 and the first radial rotor groove 1215 may be located in a region within the annular rotor groove 1214.

In some embodiments, referring to FIGs. 1, 6, and 8, the rotor 120 is of a double-layer structure including a first rotor part 121 and a second rotor part 122. The first rotor part 121 and the second rotor part 122 are respectively provided with a third surface 1216 and a fourth surface 1221 that are opposite to each other. The third surface 1216 and the fourth surface 1221 are hermetically engaged, and the third surface 1216 and the fourth surface 1221 form a part of the internal rotor flow channel when being hermetically engaged. In this way, the internal rotor flow channel can be conveniently provided in the rotor 120, and the requirements for the production equipment can be reduced. It should be understood that in specific implementation, the internal rotor flow channel inlet 1212 and the internal rotor flow channel outlet 1213 may be holes penetrating through the thickness of the first rotor part 121 and forming a part of the internal rotor flow channel.

In some embodiments, referring to FIGs. 6 and 8, one of the third surface 1216 and the fourth surface 1221 is provided with a second radial rotor groove 1217, and the second radial rotor groove 1217 forms a part of the internal rotor flow channel when the third surface 1216 and the fourth surface 1221 are hermetically engaged. As shown in FIGs. 6, 7, and 8, the embodiments show that the third surface 1216 is provided with the second radial rotor groove 1217. The second radial rotor groove 1217 extends from the rotation axis L to a position spaced from the rotation axis L by the first radius R1. The fourth surface 1221 is a plane, and when the third surface 1216 and the fourth surface 1221 are hermetically engaged, the fourth surface 1221 can close the second radial rotor groove 1217 in the third surface 1216, thereby forming a part of the internal rotor flow channel. It should be understood that in specific implementation, both the third surface 1216 and the fourth surface 1221 are parallel to the second surface 1211, and the third surface 1216 and the second surface 1211 may be two side surfaces in a thickness direction of the first rotor part 121, respectively; that is, the third surface 1216 is a rear surface of the first rotor part 121 opposite to the second surface 1211.

In some embodiments, referring to FIG. 9, the rotor 120 is of a single-layer structure, and the internal rotor flow channel thereof is formed by machining two flow channels intersecting each other into the rotor by means of drilling or milling from a center (i.e., the rotation axis L or the internal rotor flow channel inlet 1212) of the second surface 1211 and a position spaced from the rotation axis L by the first radius R1 (i.e., the internal rotor flow channel outlet 1213). The two flowing channels intersecting each other may be formed in such a manner that one of the two flowing channels intersecting each other extends longitudinally in a direction of the rotation axis, and the other extends obliquely in a direction forming an included angle with the rotation axis, or in such a manner that both of the two flow channels intersecting each other extend obliquely.

The rotor of a double-layer structure described above with reference to FIGs. 6 and 8 may have the problem of leakage due to poor hermetic engagement between the third surface 1216 and the fourth surface 1221. However, although the rotor of a single-layer structure according to the embodiments imposes higher manufacturing precision requirements on the two intersecting flow channels, the structure avoids the hermetic problem of the double-layer structure.

The rotor of a single-layer structure may also be manufactured by using a 3D printing technology. In this way, the internal rotor flow channel can be conveniently formed in the rotor 120, thereby helping to reduce the manufacturing difficulty of the rotor 120.

It should be understood that the internal rotor flow channel may be the V-shaped flow channel shown in the embodiment of FIG. 9. Certainly, the internal rotor flow channel may alternatively be of another shape, such as the U-shaped flow channel or the arc-shaped flow channel shown in the embodiment of FIG. 1.

In addition to the above embodiments, those skilled in the art can also envisage other forms of the internal rotor flow channel, or other methods for processing the internal rotor flow channel, as long as the internal rotor flow channel that bypasses the annular rotor groove 1214 in the second surface 1211 from the inside of the rotor and connects the internal rotor flow channel inlet 1212 to the internal rotor flow channel outlet 1213 can be formed.

The selection valve 100 according to an embodiment of the present application may be connected to a plurality of columns via a plurality of pairs of component connection holes; that is, a first component connection hole 116 and a second component connection hole 117 of one pair of component connection hole are connected to a forward port and a reverse port of one column, respectively. Thus, by rotating the rotor 120 to different positions relative to the stator 110, the liquid can pass through one column in a forward direction, pass through one column in a reverse direction, or not pass through the column. It can be seen that the selection valve 100 can replace a plurality of column position valves to achieve the combined function of the plurality of column position valves. Therefore, the use of the selection valve 100 in the chromatography system is beneficial for reducing the number of valves and simplifying the structure of the chromatography system. In addition, when the liquid does not pass through the column, the liquid can flow through all flow channels inside the selection valve 100, so as to achieve flushing of all flow channels inside the selection valve 100, thereby preventing residues inside the selection valve 100 from affecting the accuracy of subsequent analysis.

The embodiments of the present application further provide a chromatography system. The chromatography system includes: a plurality of columns and a selection valve 100. A forward port and a reverse port of one column are connected to a first component connection hole 116 and a second component connection hole 117 of one pair of component connection holes of the selection valve 100, respectively. The selection valve 100 may be connected to the plurality of columns via a plurality of pairs of component connection holes; that is, a first component connection hole 116 and a second component connection hole 117 of one pair of component connection holes are connected to a forward port and a reverse port of one column, respectively. Thus, by rotating the rotor 120 to different positions relative to the stator 110, the liquid can pass through one column in a forward direction, pass through one column in a reverse direction, or not pass through the column. It can be seen that the selection valve 100 can replace a plurality of column position valves to achieve the combined function of the plurality of column position valves. Therefore, the use of the selection valve 100 in the chromatography system is beneficial for reducing the number of valves and simplifying the structure of the chromatography system. In addition, when the liquid does not pass through the column, the liquid can flow through all flow channels inside the selection valve 100, so as to achieve flushing of all flow channels inside the selection valve 100, thereby preventing residues inside the selection valve 100 from affecting the accuracy of subsequent analysis.

Features of the terms "first" and "second" in the specification and claims of the present application may explicitly or implicitly include one or more such features. In the descriptions of the present application, unless otherwise stated, "plurality of" means two or more. In addition, in the specification and claims, "and/or" indicates at least one of the objects connected by the "and/or", and the character "/" generally indicates an "or" relationship between the associated objects before and after the "/".

In the description of the present application, it should be understood that the terms "center", "longitudinal", 'transverse', "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the accompanying drawings. They are merely intended for the convenience of describing the present application and simplifying the description, rather than indicating or implying that the apparatus or element referred to must have a specific orientation or be constructed and operated according to the specific direction, and thus should not be construed as limiting the present application.

In the description of the present application, it should be noted that unless otherwise explicitly specified and limited, the terms "mount", "interconnect", and "connect" should be understood in their broad senses. For example, the connection may be a fixed connection, a detachable connection, or an integral connection; a mechanical connection or an electrical connection; or a direct connection, an indirect connection via an intermediate, or a connection between interiors of two elements. For those of ordinary skill in the art, the specific meanings of the above terms in the present application may be understood according to specific conditions.

One or more embodiments of the specification are intended to cover all such alternatives, modifications, and variations that fall within the broad scope of the appended claims. Therefore, any omissions, modifications, equivalent substitutions, improvements, and the like made within the spirit and principle of one or more embodiments of the specification shall fall within the protection scope of the present application.

The above descriptions are only specific embodiments of the present application, but the protection scope of the present application is not limited thereto. Any variations or substitutions that can be easily conceived by those skilled in the art within the technical scope disclosed in the present application shall fall within the protection scope of the present application. Therefore, the protection scope of the present application shall be subject to the protection scope of the claims.

## Claims

1. A selection valve, comprising: a stator and a rotor capable of rotating relative to each other around a rotation axis, wherein the stator and the rotor are respectively provided with a first surface and a second surface that are opposite to each other and are in dynamic hermetic engagement;
the first surface is provided with a first inlet and outlet hole, a second inlet and outlet hole, a first radial stator groove, a second radial stator groove, and a plurality of pairs of component connection holes, the first radial stator groove is connected with the second inlet and outlet hole, the first inlet and outlet hole is located at the rotation axis, the second radial stator groove and the first radial stator groove are symmetrically arranged with respect to the first inlet and outlet hole, each pair of the component connection holes comprises a first component connection hole and a second component connection hole, and the first component connection hole and the second component connection hole are symmetrically arranged with respect to the first inlet and outlet hole;
the second surface is provided with an internal rotor flow channel inlet, an internal rotor flow channel outlet, an annular rotor groove, and a first radial rotor groove, the internal rotor flow channel inlet is located at the rotation axis to be connected with the first inlet and outlet hole, the internal rotor flow channel outlet is connected with the internal rotor flow channel inlet via an internal rotor flow channel arranged in the rotor, the annular rotor groove is arranged around the internal rotor flow channel inlet, the annular rotor groove is connected with the first radial stator groove and the second radial stator groove, the first radial rotor groove is connected with the annular rotor groove, and a connecting line between the internal rotor flow channel inlet and the internal rotor flow channel outlet is collinear with the first radial rotor groove; and
when the rotor rotates relative to the stator, one of the first component connection hole and the second component connection hole of one pair of the component connection holes is connected with the first radial rotor groove, and the other is connected with the internal rotor flow channel outlet, or one of the first radial stator groove and the second radial stator groove is connected with the first radial rotor groove, and the other is connected with the internal rotor flow channel outlet.

2. The selection valve according to claim 1, wherein both the first radial stator groove and the second radial stator groove extend from a position spaced from the rotation axis by a second radius to a position spaced from the rotation axis by a first radius, and
the first component connection hole and the second component connection hole are both located at a position spaced from the rotation axis by the first radius.

3. The selection valve according to claim 2, wherein the internal rotor flow channel outlet is located at a position spaced from the rotation axis by the first radius, the annular rotor groove is centered on the rotation axis and has the second radius, and the first radial rotor groove extends from a position spaced from the rotation axis by the second radius to a position spaced from the rotation axis by the first radius.

4. The selection valve according to claim 1, wherein each first component connection hole of the plurality of pairs of component connection holes is located on one side of a connecting line defined by the first radial stator groove, the second radial stator groove, and the first inlet and outlet hole, and each second component connection hole of the plurality of pairs of component connection holes is located on the other side of the connecting line defined by the first radial stator groove, the second radial stator groove, and the first inlet and outlet hole.

5. The selection valve according to claim 3, wherein the first radius is greater than the second radius.

6. The selection valve according to claim 1, wherein the rotor is of a double-layer structure comprising a first rotor part and a second rotor part, the first rotor part and the second rotor part are provided with a third surface and a fourth surface, respectively, the third surface and the fourth surface are opposite to each other and are hermetically engaged, one of the third surface and the fourth surface is provided with a second radial rotor groove, and the second radial rotor groove forms the internal rotor flow channel when the third surface and the fourth surface are hermetically engaged.

7. The selection valve according to claim 1, wherein the rotor is of a single-layer structure, and the internal rotor flow channel is formed by machining two flow channels intersecting each other into the rotor from the internal rotor flow channel inlet and the internal rotor flow channel outlet on the second surface.

8. The selection valve according to claim 2, wherein the second inlet and outlet hole is arranged at any location within a length extension range of the first radial stator groove.

9. The selection valve according to claim 8, wherein the second inlet and outlet hole is arranged at a position spaced from the rotation axis by the first radius.

10. The selection valve according to claim 1, wherein when the rotor rotates relative to the stator to a position where the first radial stator groove is connected with the first radial rotor groove and the second radial stator groove is connected with the internal rotor flow channel outlet, liquid introduced into the selection valve from the first inlet and outlet hole sequentially passes through the internal rotor flow channel inlet, the internal rotor flow channel, the internal rotor flow channel outlet, the second radial stator groove, the annular rotor groove, the first radial rotor groove, the first radial stator groove, and the second inlet and outlet hole, thereby enabling all flow channels inside the selection valve to be flushed.
